# EUROPEAN PATENT SPECIFICATION

(11) **EP 3 981 679 B1**
(45) Date of publication and mention of the grant of the patent: **28.08.2024**
(21) Application number: 21275122.6
(22) Date of filing: 31.08.2021
(51) Int. Cl.: B62K 5/02, B62K 5/10, B62K 7/04, B62K 5/06

(54) **A SPRING SYSTEM**
FEDERSYSTEM
SYSTÈME DE RESSORT

(30) Priority: 08.09.2020 GB 202014119
(43) Date of publication of application: 13.04.2022
(73) Proprietor: Pashley Holdings Limited, Stratford-upon-Avon CV37 9NL (GB); Simpact Engineering Limited, Warwick, Warwickshire CV34 6RS (GB)
(72) Inventor: Williams, Adrian, Stratford-Upon-Avon, CV37 9NL (GB); Landheer, Dirk, Leamington Spa, CV34 6RS (GB)
(74) Representative: Dempster, Benjamin John Naftel

(56) References cited:
- EP-B1- 0 551 266
- WO-A1-2020/160406
- CN-A- 105 966 513
- CN-Y- 2 463 286
- JP-U- S5 392 857
- US-A- 3 583 727
- US-A- 3 938 609

## Description

The invention relates to a vehicle with a spring system.

US-A-3504934 relates to a tricycle wheel and frame arrangement. It discloses a delta tricycle with a small internal combustion engine. The tricycle has a main frame which mounts the front ground wheel, handlebars and saddle, and a rear sub-frame assembly which mounts the two rear ground wheels and the engine. The main frame and rear sub-frame assembly are connected through two ball and socket joints so that the main frame can tilt with respect to the rear sub-frame assembly. A stabiliser spring is provided on each side of the front ball and socket joint. When the tricycle is being ridden and negotiating a bend, the rider leans over to the inside of the curve taking over with him the main frame after the manner of riding a bicycle. The tilting of the main frame compresses one of the stabiliser springs which exerts pressure on the rear wheel which is on the inside of the curve or bend and acts to press this wheel against the ground and resists the tendency for this wheel to lift from the ground so the tricycle remains in a stable condition.

US 3 583 727 A discloses the following features of claim 1, a vehicle with a tilting part for a pilot, the tilting part including at least one ground engaging wheel, the vehicle further comprising a second part carrying at least one ground engaging wheel on each side of the vehicle, connection means connecting the two parts so the tilting part can tilt with respect to the second part so that the pilot can lean into a corner, and a spring system to resist tilting of the tilting part with respect to the second partwherein the resistance to tilting provided by the spring system is such that it provides a first rate of increase of resistance to tilting over a first range to a first angle of tilt, and a second rate of increase of resistance to tilting over a second range from the first said angle to a second, greater angle of tilt, the second rate being higher than the first rate, wherein the spring system comprises a spring section and a stop section, the spring section and stop section being arranged to pivot with respect to each other, the spring section carrying a first spring and the stop section carrying two first stops, and the spring section carrying a second spring and the stop section carrying two second stops, so that when the stop section is pivoted with respect to the spring section in one direction, the first spring engages with one first stop and resists the pivoting movement, and after a certain further angle of pivoting the second spring engages with a second stop and resists the pivoting movement, and correspondingly when the stop section is pivoted with respect to the spring section in the opposite direction, the second spring engages with the other second stop and resists the pivoting movement, and after a certain further angle of pivoting the first spring engages with the other first stop and resists the pivoting movement, wherein the springs extend in opposing directions.

A known spring system is a leaf spring pack, which is known for use in vehicle suspension. This consists of a stack of leaf springs of increasing length. The ends of the leaf spring pack may be attached to the chassis of the vehicle and the centre of the pack may be attached to the axle of a wheel. As the pack is compressed upwardly, more and more leaf springs in the pack come into use and so the spring rate of the pack increases. The system works for compression in one direction.

According to the invention there is provided a vehicle according to claim 1.

In this way, the rider can lean the tilting part of the vehicle over when going around a corner. As the rider starts to lean the tilting part over, there is little resistance to tilting, and so it feels natural, like riding a bicycle. As the angle of tilt increases into the second range, the resistance to tilting will increase. This will have two effects. It will exert rapidly increasing pressure on the ground engaging wheel of the second part which is on the inside of the corner, to urge that wheel to the ground and keep the second part stable. It will also resist the speed and torque of tilting so that the maximum extent of tilting between the tilting part and the second part is either not reached or is reached at low speed and torque, which is safer for the pilot.

Also in this way, whichever way the sections of the system are pivoted, the pivoting will be resisted, first by one leaf spring, and then by both leaf springs, so that the effective spring rate is increased. In other words, after pivoting in one direction, the pivoting will initially be resisted by the first leaf spring only, at the spring rate of the first spring, and then after further pivoting it will be resisted by both leaf springs, at a combined spring rate which is higher.

The certain angle of pivoting may be any suitable range of movement and may be 8 degrees or more, or in another embodiment may be 10 degrees or more. The certain angle of pivoting may be 16 degrees or less, and may be 14 degrees or less. In a preferred embodiment the certain angle of pivoting is about 12 degrees.

The leaf springs may be at an angle to one another.

The spring section and stop section may take any suitable form and in one embodiment, the spring section comprises a frame around the stop section.

The spring system may include means to provide a further increase in spring rate after a set angle of pivoting. The means may take any suitable form and each leaf spring may comprise a fulcrum to shorten the effective length of the leaf spring and hence increase the spring force, the fulcrum engaging the leaf spring after a set angle of bending of the leaf spring. Thus, no additional springs are required to achieve the increased spring rate. Each leaf spring can be a strip which may be of constant thickness and may be rectangular in shape. Each strip can be flat or shaped. Each strip can be a single body or be composed of a stack of identical or different bodies. Alternatively each leaf spring can be prismatic or for example of variable thickness.

The set angle of bending may be any suitable range of movement and may be 16 degrees or more, or may be 18 degrees or more. The set angle of bending may be 24 degrees or less, or may be 22 degrees or less. In a preferred embodiment the set angle of bending is about 20 degrees.

Where appropriate, the system may be such that, from a neutral position, over a first range of pivoting neither leaf spring contacts a stop. The first range may be less than 8 degrees.

The stops may be on the tilting part and the leaf springs on the second part.

The second part may form a frame around the portion of the tilting part which carries the stops.

An embodiment of the invention will now be described, by way of example, and with reference to the accompanying drawings, in which:
Fig 1 is a front perspective view of the vehicle of the embodiment of the invention;
Fig 2 is a rear perspective view of the vehicle of Fig 1;

The resistance to tilting provided by the leaf spring system is preferably such that it provides a first rate of increase of resistance to tilting over a first range to a first angle of tilt, and a second rate of increase of resistance to tilting over a second range from the first said angle to a second, greater angle of tilt, the second rate being higher than the first rate. In this way, the rider can lean the tilting part of the vehicle over when going around a corner. As the rider starts to lean the tilting part over, there is little resistance to tilting, and so it feels natural, like riding a bicycle. As the angle of tilt increases into the second range, the resistance to tilting will increase. This will have two effects. It will exert rapidly increasing pressure on the ground engaging wheel of the second part which is on the inside of the corner, to urge that wheel to the ground and keep the second part stable. It will also resist the speed and torque of tilting so that the maximum extent of tilting between the tilting part and the second part is either not reached or is reached at low speed and torque, which is safer for the pilot.

The leaf spring system is preferably a spring system according to the previous aspect of the invention and including any or none of the preferred or optional features thereof.

The stops may be on the tilting part and the leaf springs on the second part.

The second part may form a frame around the portion of the tilting part which carries the stops.

Embodiments of the invention will now be described, by way of example, and with reference to the accompanying drawings, in which:

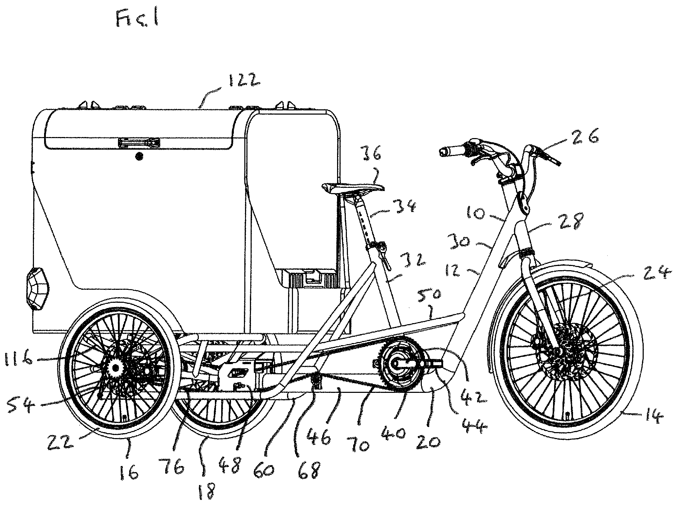

Fig 1 is a front perspective view of the vehicle of the first embodiment of the invention;

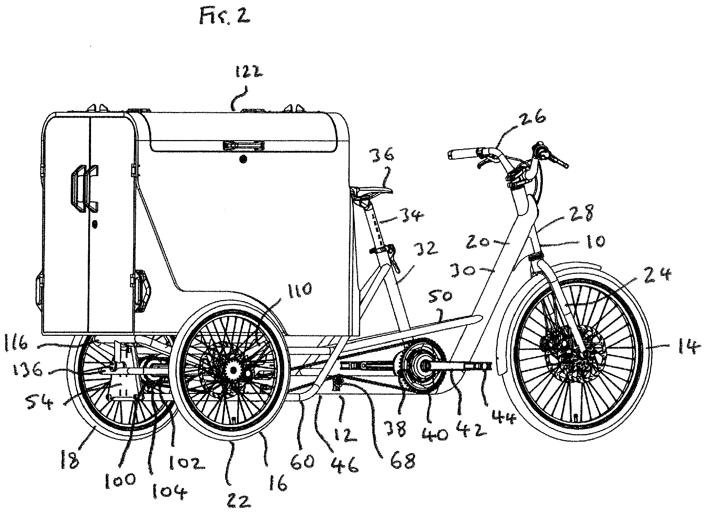

Fig 2 is a rear perspective view of the vehicle of Fig 1;

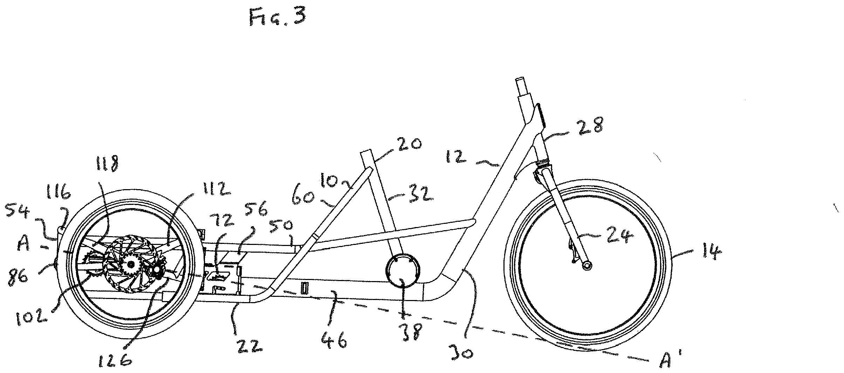

Fig 3 is a side view of the vehicle of Fig 1 with handlebars, saddle, pedals and cargo container removed for clarity;

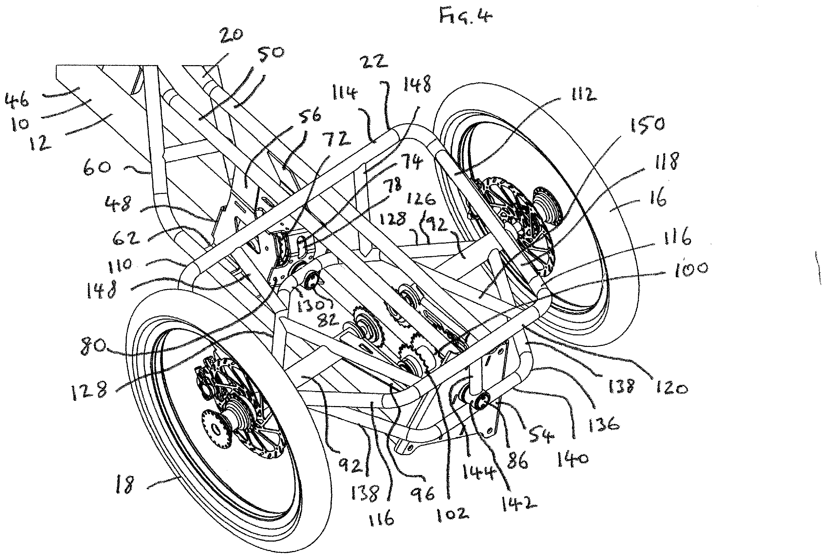

Fig 4 is a perspective view from above of the rear of the vehicle without the cargo container and with the spring system not shown;

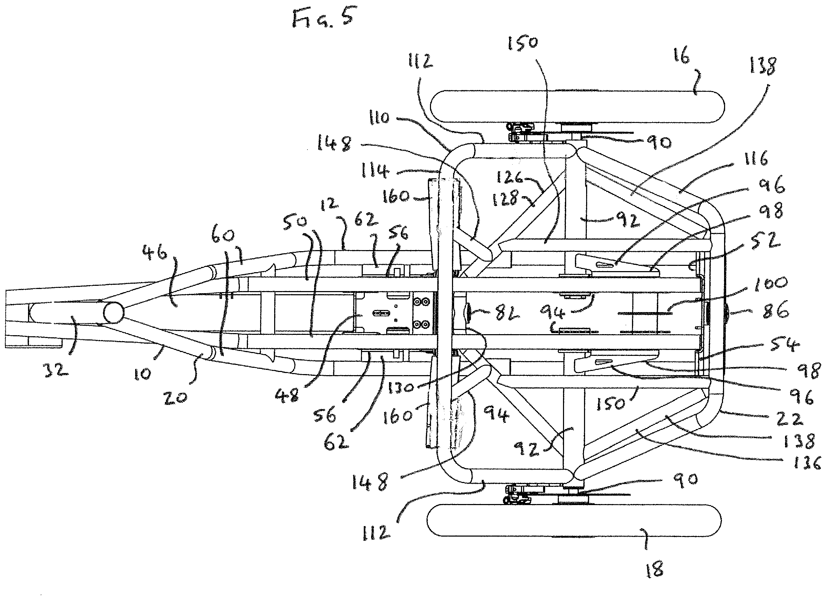

Fig 5 is a top plan view of the rear of the vehicle without the cargo container;

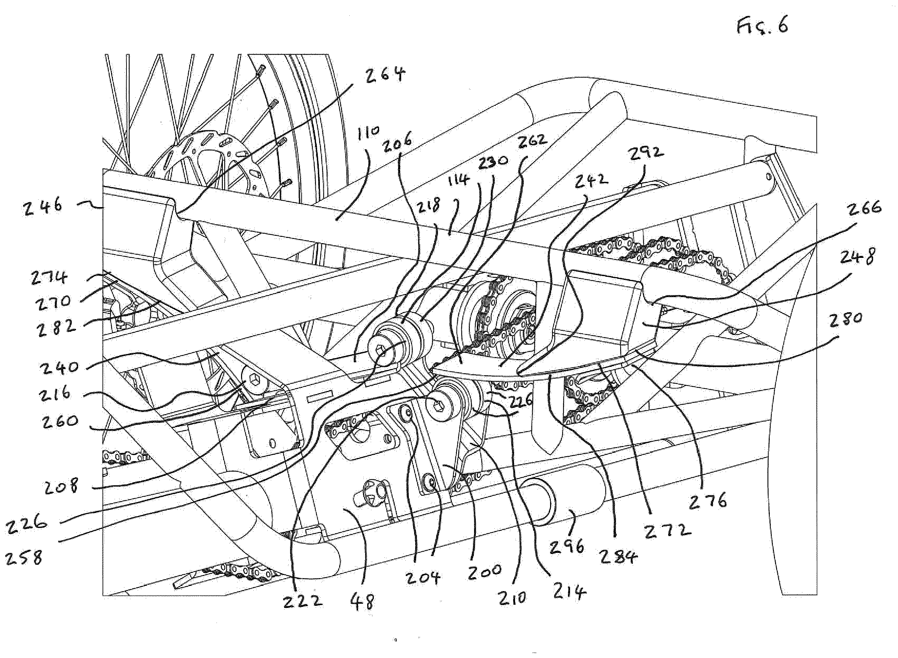

Fig 6 is a fragmentary, detail perspective view from the front of the vehicle without the cargo container;

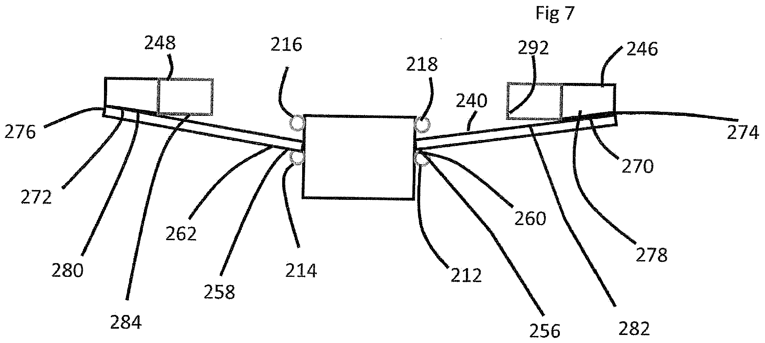

Fig 7 is a schematic view of the leaf spring system of the first embodiment in the neutral position,

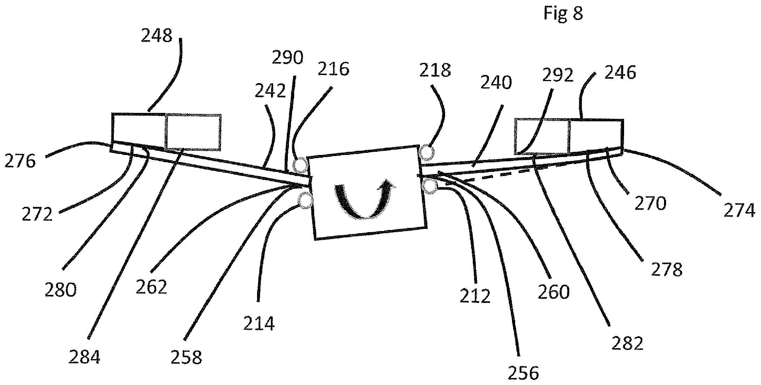

Figs 8 to 10 are the schematic view of Fig 7 showing increasing angles of pivoting of the leaf spring system;

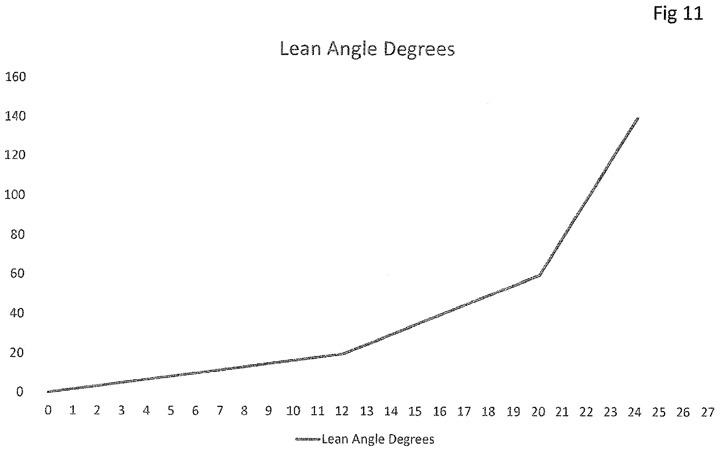

Fig 11 is a graph of transfer torque against lean angle for the system;

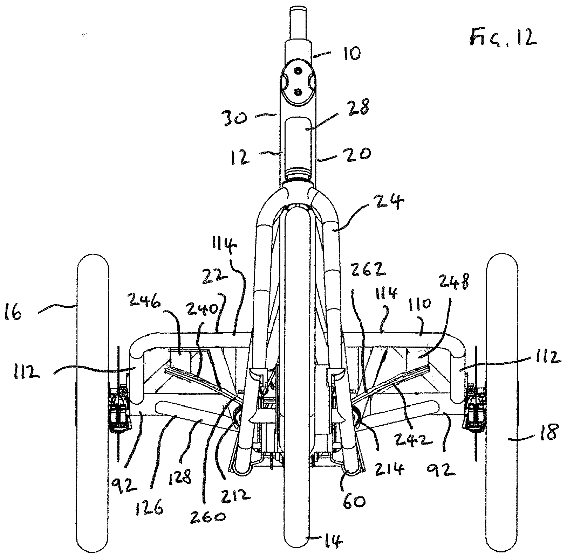

Fig 12 is a front elevation of a vehicle not showing the saddle, pedals, handlebars or cargo container; and,

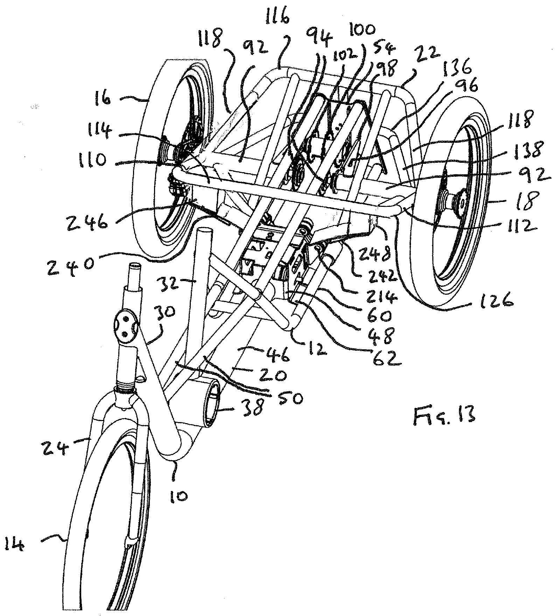

Fig 13 is a front perspective view of the vehicle of Fig 12.

The vehicle of the embodiment comprises a tricycle 10. The tricycle 10 is in delta form with a frame 12, front wheel 14 and right and left rear wheels 16, 18.

The vehicle 10 comprises two parts, a first, front, tilting part 20, which carries the front wheel 14, and a second, rear part 22 which carries the two rear wheels 16, 18, one on each side. The first part 20 can tilt with respect to the second part 22.

The tilting part 20 comprises front wheel 14, forks 24, handlebars 26, head tube 28, down tube 30, seat tube 32, seat post 34, saddle 36, and bottom bracket 38 mounting the front chain ring 40, cranks 42 and pedals 44. The down tube 30 extends downwardly from the head tube 28 in the usual manner and then diverts to form a spine tube 46 which extends substantially horizontally rearwardly. The rear end of the spine tube 46 mounts a transfer box 48. The bottom bracket 38 is arranged on top of the spine tube 46 and the seat tube 32 extends upwardly from the bottom bracket 38.

The tilting part 20 further comprises two upper tubes 50 which extend rearwardly from around midway down the down tube 30 and pass one on each side of the seat tube 32, beyond the transfer box 48 and on to beyond the rear axles of the rear wheels 16, 18 where their ends are connected to the front face 52 of an upright plate 54. The plate 54 is substantially trapezium shaped, with the shorter parallel side at the top, and the tubes 50 are attached at the two upper corners of the plate 54. The upper tubes 50 are attached to the transfer box 48 by brackets 56.

The tilting part 20 further includes another two tubes 60, which are attached at their forward end to near the top of the seat tube 32. The lower tubes 60 depend downwardly and outwardly from the seat tube 32 and then divert to extend substantially horizontally rearwardly in parallel. The rear ends of the lower tubes 60 are connected to the two lower corners of the plate 54. The lower tubes 60 are attached to the transfer box 48 by brackets 62.

The front chain ring 40 carries a front chain 70 in a continuous loop, and the chain 70 also passes over an outer sprocket 72 mounted in the transfer box 48. The lower part of the front chain loop passes on top of an idler wheel 68 mounted on the side of the spine tube 46. The outer sprocket 72 is fast with a mid line sprocket 74. The mid line sprocket 74 carries a rear chain 76, which exits the transfer box 48 through an upper aperture 78 in the rear face 80 of the transfer box 48 and through the underside of the transfer box 48.

The rear face 80 of the transfer box 48 mounts a front stub axle 82 which extends rearwardly beneath the upper aperture 78.

The plate 54 mounts a rear stub axle 86 which extends rearwardly from the rear face thereof.

The second part 22 carries the right and left rear wheels 16, 18, the axles 90 of which are received in axle tubes 92. The inner end of each axle 90 protrudes out of the axle tube 92 and is fast with a wheel drive sprocket 94, which is coaxial with the axle 90, so that the two wheel drive sprockets 94 face one another and are spaced apart. An arm 96 extends rearwardly from the inner end of each axle tube 92. Between the rear ends 98 of the two arms 96 are mounted three sprockets 100, 102 which are mounted coaxially and fast with one another. The central sprocket 100 receives the rear chain 76 from the transfer box 48. Each outer sprocket 102 carries a chain 104 which connects it to the wheel drive sprocket 94 on that side of the vehicle 10.

The second part 22 further includes an upper, front U shaped tube 110. The tube 110 includes a first portion 112 which extends upwardly and forwardly from the front face of each axle tube 92 adjacent the wheel, and a second portion 114 which extends across above the upper tubes 50. The second part 22 further includes an upper rear U shaped tube 116. The tube 116 includes a first portion 118 which extends upwardly and rearwardly from the rear face of each axle tube 92 adjacent the wheel, and a second portion 120 which extends across so that the second portion 120 and second portion 114 of the upper, front tube 110 are parallel and perpendicular to the front rear plane of substantial symmetry of the tricycle 10, so as to present a substantially horizontal support surface for a large cargo container 122.

The second part 22 further includes a lower, front U shaped tube 126. The tube 126 includes a first portion 128 which extends downwardly and forwardly from the front face of each axle tube 92 inbound of the upper, front tube 110, and a second portion 130 which extends across above the lower tubes 60. Centrally of the second portion 130 and depending from it is a ring 132 which pivotably receives the front stub axle 82 carried by the transfer box 48. The second part 22 further includes a lower, rear U shaped tube 136. The tube 136 includes a first portion 138 which extends rearwardly from the rear face of each axle tube 92 inbound of the upper, rear tube 116, and a second portion 140 which extends across behind the plate 54. Centrally of the second portion 140 is a ring 142 which pivotably receives the rear stub axle 82 carried by the plate 54.

A strut 144 extends from the ring 142 to the second portion 120 of the upper rear tube 116 above it.

A strut 148 is provided on each side from the first portion 128 of the lower, front tube 126 to the second portion 114 of the upper, front tube 110. A further strut 150 is provided on each side from the first portion 128 of the lower, front tube 126 to the second portion 120 of the upper, rear tube 116.

A side angle bracket 200, 202 is attached to each side of the transfer box 48 at the back by two bolts 204. A top angle bracket 206 is attached to the top of the transfer box 48 at the back by two bolts 208. The side and top angle brackets 200, 202, 206 mount a frame 210 behind them. Between each side bracket 200, 202 and the frame 210 is mounted a lower stop 212, 214. Between each end of the top bracket 206 and the frame 210 is mounted an upper stop 216, 218. Each stop 212, 214, 216, 218 comprises a tubular shaft 222 carrying coaxially thereon an elastomeric bush 226, which in turn carries coaxially thereon two side by side metal rings 230 with a small spacing between them.

Two leaf springs 240, 242 are mounted on the second portion 114 of the upper, front U shaped tube 110. Each leaf spring 240, 242 is in the form of a rectangular strip of constant thickness. Each leaf spring 240, 242 is mounted to the second portion 114 through a block 246, 248. The blocks 246, 248 are mounted one at each end of the second portion 114. Each leaf spring 240, 242 is mounted to depend downwardly from the block 246, 248 at an angle so as, in the neutral position in which the tilting part 20 is not tilted with respect to the second part 22, the lower surface 256, 258 of the free end 260, 262 of the leaf spring 240, 242 lies just above the lower stop 212, 214 on that side of the tricycle 10. Each block 246, 248 has an upper face 264, 266 in the shape of an upwardly facing part circular cross section channel which receives the circular tube second portion 114. Each block 246, 248 has a lower face in two portions in two planes. The upper face 270, 272 of the outer end 274, 276 of each leaf spring 240, 242 is attached to the outer, first portion 278, 280. The plane of the second portion 282, 284 is at a slight angle to the plane of the first portion 278, 280, so that in the neutral position each leaf spring 240, 242 does not touch the second portion 282, 284. The inside end 292, 294 of the second portion 282, 284 forms a fulcrum.

In use, the pilot sits on the saddle 36 and pushes the pedals 44 with their feet in the usual way to drive the tricycle 10 along. Rotating the pedals 44 rotates the chain ring 40 which drives the front chain 70. The front chain 70 drives the outer sprocket 72 mounted in the transfer box 48. The outer sprocket 72 is fast with the mid line sprocket 74, which is therefore driven thereby. The mid line sprocket 74 drives the rear chain 76, which in turn drives the central sprocket 100. The central sprocket 100 is fast with and hence drives the two outer sprockets 102. The outer sprockets 102 carry chains 104 to the wheel drive sprockets 94. Each wheel drive sprocket 94 is fast with the axle 90 on that side which drives the wheel 16, 18 on that side, so that the tricycle 10 is driven forwards. Both rear wheels 16, 18 of the tricycle 10 are thus driven.

Through the engagement of the rear wheels 16, 18 with the ground, the second part 22 remains stable with the wheel axles 90 and axle tubes 92 parallel to the ground. Through the front and rear stub axles 82, 86, and the rings 132, 142 the whole of the front part 20 can tilt with respect to the second part 22, and hence in relation to the ground. The front and rear stub axles 82, 86, and the rings 132, 142 constitute the aforesaid "connection means".

In this way, the pilot, sitting on the saddle, can keep the front part 20 of the tricycle 10 upright on flat ground, or if there is an adverse camber, in which case the second part 22 may tilt and the front part 20 stay upright. When the pilot goes around a corner on the tricycle 10, he can lean into the corner and the front part 20 of the tricycle 10 will pivot around the stub axles 82, 86 to lean over.

The stub axles 82, 86 are aligned so that the axis of tilting is not horizontal but instead is directed down towards the front of the tricycle, as shown in at A-A' in Fig 3, to intersect with the region of the front wheel 14 which is in contact with the ground. In this way, the tricycle 10 can tilt freely. If the axis were horizontal, for example, the front of the rear part 22 would be pivoted down when the front part 20 tilted over, and depending on the balance of the rear part 22, this would create a bias towards or against tilting. By angling the tilt axis A-A' in this way, the rear part 22 is unaffected by tilting of the front part 20.

Returning to the chains, only the rear chain 76 spans the tilting part 20 and the second part 22. The rear chain 76 passes over the mid line sprocket 74 and the central sprocket 100. The rotational axes of both the mid line sprocket 74 and the central sprocket 100 lie on the axis of tilting A-A'. In this way, during tilting, sideways forces on the rear chain 76 acting to pull the chain of the sprockets will be balanced and minimised to minimise the risk of the rear chain 76 coming off one of the sprockets 74, 100.

There is a limit to how far the tilting part 20 of the tricycle 10 can tilt with respect to the second part 22. Eventually, the first portion 128 of the lower, front U shaped tube 126 will come into contact with the second tube 60. To prevent this happening abruptly, the leaf springs 240, 242 and stops 212, 214, 216, 218 provide resistance.

Figures 7 to 10 show the progression as the tilting part 20 tilts with respect to the second part 22.

As the tilting part 20 begins to tilt to the left to conduct a left hand turn, the left hand lower stop 212 comes into contact with the lower surface 256 of the free end 260 of the left hand leaf spring 240. The dotted line in Fig 8 shows how the leaf spring 240 is bent from the unstressed position. The graph in Fig 11 shows the transfer torque as the angle of tilt increases from zero degrees.

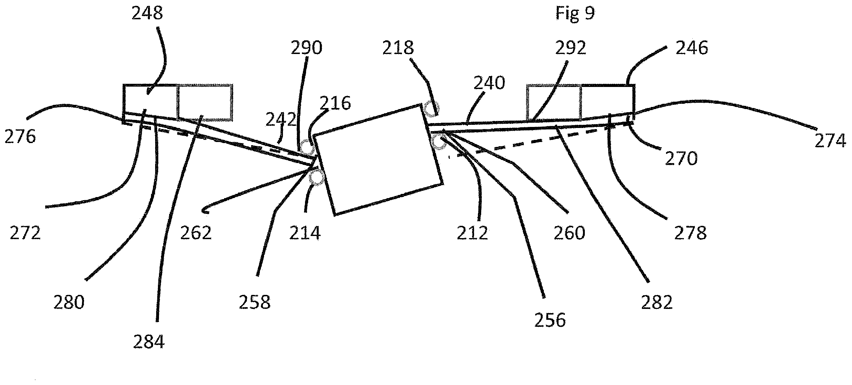

At an angle of tilt of about 12 degrees between the tilting part 20 and the second part 22, the upper surface 290 of the free end 262 of the right hand leaf spring 242 comes into contact with the right hand upper stop 216, and the right hand leaf spring 242 starts to be bent, as shown in Fig 9. Thus, in this range of twisting from about 12 degrees upwards, both leaf springs 240, 242 are resisting the tilting. The graph in Fig 11 shows an increased gradient representing an increased rate of increase of resistance.

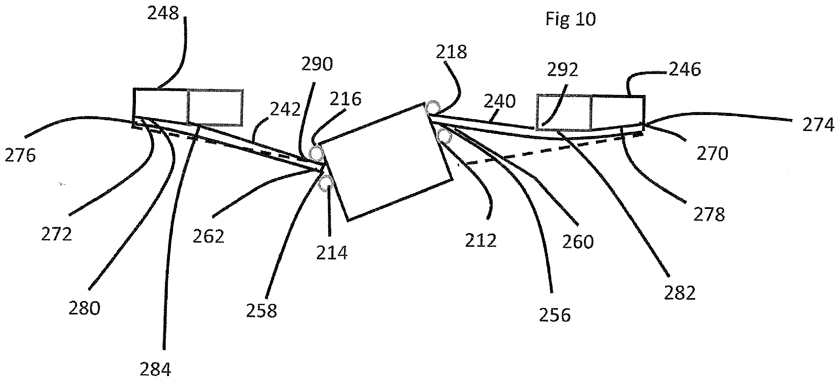

When the tilting part 20 has tilted with respect to the second part 22 by about 20 degrees, the upper surface 270 of the outer end 274 of the left hand leaf spring 240 contacts the second portion 282, the inner end 292 of which acts as a fulcrum to effectively shorten the leaf spring 240 so that only the portion of the leaf spring 240 between the fulcrum 292 and the stop 212 is acting, which increases the resistance to tilting. This is shown in Fig 10 and the graph in Fig 11 demonstrates a further increase in gradient.

Eventually the tilting part 20 will tilt so far with respect to the second part 22 that the first portion 128 of the lower, front U shaped tube 126 contacts an elastomeric bush 296 encircling the lower tube 60 of the tilting part 20, and the tilting part 20 can tilt no further. This is at about 24 degrees. The torque exerted by the leaf springs 240, 242 at that angle may be about 140Nm.

It is seen that the system is symmetrical and so tilting in the other direction is resisted in the same way.

It will be noted that, as the pilot leans the front part 20 of the tricycle 10 over to go around a corner, the interaction between the leaf springs 240, 242 and stops 212, 214, 216, 218 provides a torque in the direction to push the rear wheel 16, 18 on the inside of the corner to the ground, thus resisting tendency in tricycles for the inside wheel to lift in cornering, and also resisting torque from a load in the cargo container 122 in the direction to topple over the second part 22 to the outside of the corner. The leaf spring system therefore increases the safety of the tricycle 10.

When the pilot initially leans the tilting part 20, there is relatively low resistance from the single leaf spring 240, 242. This gives a natural feel to cornering, like riding a bicycle. From 12 to 20 degrees, both leaf springs 240, 242 resist the tilting and so the rate of increase in resistance is greater. From 20 to 24 degrees, the rate of increase of resistance is even greater, as the effective length of one leaf spring 240, 242 is shortened. The maximum tilt angle is 24 degrees in this embodiment.

It is noted that the tricycle 10 does not include suspension for any of the wheels 14, 16, 18. Suspension would allow the second part 22 to lean outwards during cornering, which is undesirable. The seat post 34 may be a suspension seat post if more comfort is required for the pilot.

The tricycle is a narrow tilting vehicle. The tricycle 10 is 780mm wide, and hence can fit comfortably into current cycling infrastructure, and two such tricycles 10 can be parked side by side in the parking space for one car.

The tricycle 10 could include a basket or other means of carrying items on the front, for example in front of the handlebars, in known manner.

The leaf springs 240, 242 may be made of any suitable material, such as metal or a composite material such as carbon fibre composite material.

In this embodiment, the tilting part constitutes the aforesaid "stop section" and the second part constitutes the aforesaid "spring section".

In a variant, the system may be such that, from a neutral position, over a first range of pivoting neither leaf spring 240, 242 contacts a stop. The first range may be less than 8 degrees. There would therefore be no resistance to tilting over this first range of pivoting.

Figures 12 and 13 show another vehicle. In this vehicle, only the lower stops 212, 214 are provided, there are no upper stops 216, 218. Also, the blocks 246, 248 do not include the second portions 282, 284.

Thus, in use, as the tilting part 20 tilts to the right, for example, the free end 260 of the right hand leaf spring 240 will move away from the stop 212, while the free end 262 of the left hand leaf spring 242 will engage the left hand stop 214 and resist the tilting with steadily increasing force as the angle of tilting increases. As before, at the limit of movement is when the elastomeric bush 296 on the lower tube 60 of the tilting part 20 contacts the first portion 128 of the lower, front U shaped tube 126.

In an alternative embodiment, the cargo container 122 is smaller, and may be used for touring equipment or just for carrying shopping. Indeed, in a further embodiment, the cargo container 122 may be omitted, and the tricycle used primarily as transport for the pilot.

The tricycle 10 may include an e-assist electric motor. In another embodiment, the tricycle may include a motor, such as an electric motor or internal combustion engine, and may not have pedals.

In an alternative embodiment, the trike may be a tadpole trike, with the two wheeled part at the front, and the tilting part at the back.

In an alternative embodiment, the tilting part may have two wheels, one on each side, but arranged to move up and down with respect to each other so that when the tilting part is tilted over, they both remain in contact with the ground.

While in the embodiment, each leaf spring is a strip which may be of constant thickness and may be rectangular in shape, in other embodiments, each strip may not be flat, but may be shaped. Each strip can be a single body as in the embodiment, or can be composed of a stack of identical or different bodies. Alternatively each leaf spring can be prismatic or, for example, of variable thickness.

## Claims

1. A vehicle (10) with a tilting part (20) for a pilot, the tilting part (20) including at least one ground engaging wheel (16), the vehicle (10) further comprising a second part (22) carrying at least one ground engaging wheel (16) on each side of the vehicle (10), connection means connecting the two parts so the tilting part (20) can tilt with respect to the second part (22) so that the pilot can lean into a corner, and a leaf spring (240) system to resist tilting of the tilting part (20) with respect to the second part (22) wherein the resistance to tilting provided by the leaf spring system is such that it provides a first rate of increase of resistance to tilting over a first range to a first angle of tilt, and a second rate of increase of resistance to tilting over a second range from the first said angle to a second, greater angle of tilt, the second rate being higher than the first rate, wherein the leaf spring system comprises a spring section and a stop section, the spring section and stop section being arranged to pivot with respect to each other, the spring section carrying a first leaf spring (240, 242) and the stop section carrying two first stops (212, 214, 216, 218), and the spring section carrying a second leaf spring (240, 242) and the stop section carrying two second stops (212, 214, 216, 218), so that when the stop section is pivoted with respect to the spring section in one direction, the first leaf spring (240, 242) engages with one first stop (212, 214, 216, 218) first and resists the pivoting movement, and after a certain further angle of pivoting the second leaf spring (240, 242) engages with a second stop (212, 214, 216, 218) and resists the pivoting movement, and correspondingly when the stop section is pivoted with respect to the spring section in the opposite direction, the second leaf spring (240, 242) engages with the other second stop (212, 214, 216, 218) first and resists the pivoting movement, and after a certain further angle of pivoting the first leaf spring (240, 242) engages with the other first stop (212, 214, 216, 218) and resists the pivoting movement, wherein the leaf springs (240, 242) extend in opposing directions

2. A vehicle as claimed in claim 1, wherein the certain angle of pivoting is 8 degrees or more.

3. A vehicle as claimed in claim 1, wherein the certain angle of pivoting is 10 degrees or more.

4. A vehicle as claimed in claim 1 or claim 2 or claim 3, wherein the certain angle of pivoting is 16 degrees or less,

5. A vehicle as claimed in claim 1, 2 or 3, wherein the certain angle of pivoting is 14 degrees or less.

6. A vehicle as claimed in any preceding claim, wherein the leaf springs (240, 242) are at an angle to one another.

7. A vehicle as claimed in any preceding claim, wherein the spring section comprises a frame (210) around the stop (212, 214, 216, 218) section.

8. A vehicle as claimed in any preceding claim, wherein the spring system includes means to provide a further increase in spring rate after a set angle of pivoting,

9. A vehicle as claimed in claim 8, wherein the means comprises a fulcrum (292) associated with each leaf spring (240, 242), the fulcrum (292) acting to shorten the effective length of the leaf spring (240, 242) and hence increase the spring force, the fulcrum (292) engaging the leaf spring (240, 242) after a set angle of bending of the leaf spring (240, 242).

10. A vehicle as claimed in claim 9, wherein the set angle of bending is 16 degrees or more,

11. A vehicle as claimed in claim 9, wherein the set angle of bending is 18 degrees or more.

12. A vehicle as claimed in claim 9, 10, or 11, wherein the set angle of bending is 24 degrees or less.

13. A vehicle as claimed in claim 9, 10 or 11, wherein the set angle of bending is 22 degrees or less.

14. A vehicle as claimed in any preceding claim, wherein the stops (212, 214, 216, 218) are on the tilting part (20) and the leaf springs (240, 242) on the second part.

15. A vehicle as claimed in any preceding claim, wherein the second part (22) forms a frame (210) around the portion of the tilting part which carries the stops (212, 214, 216, 218).

## Patentansprüche

1. Fahrzeug (10) mit einem kippbaren Teil (20) für einen Fahrer, wobei der kippbare Teil (20) mindestens ein bodenberührendes Rad (16) aufweist, das Fahrzeug (10) ferner einen zweiten Teil (22) aufweist, der mindestens ein bodenberührendes Rad (16) auf jeder Seite des Fahrzeugs (10) trägt, Verbindungsmittel, die die beiden Teile verbinden, so dass der kippbare Teil (20) in Bezug auf den zweiten Teil (22) kippen kann, so dass sich der Fahrer in eine Kurve lehnen kann, und einem Blattfedersystem (240), um dem Kippen des kippbaren Teils (20) in Bezug auf den zweiten Teil (22) zu widerstehen, wobei der durch das Blattfedersystem vorgesehene Widerstand gegen Kippen derart ist, dass er eine erste Steigerungsrate des Widerstands gegen Kippen über einen ersten Bereich bis zu einem ersten Kippwinkel und eine zweite Steigerungsrate des Widerstands gegen Kippen über einen zweiten Bereich von dem ersten Winkel bis zu einem zweiten, größeren Kippwinkel bereitstellt, wobei die zweite Rate höher ist als die erste Rate, wobei das Blattfedersystem einen Federabschnitt und einen Anschlagabschnitt aufweist, wobei der Federabschnitt und der Anschlagabschnitt angeordnet, um relativ zueinander zu schwenken, wobei der Federabschnitt eine erste Blattfeder (240, 242) trägt und der Anschlagabschnitt zwei erste Anschläge (212, 214, 216, 218) trägt, und der Federabschnitt eine zweite Blattfeder (240, 242) trägt und der Anschlagabschnitt zwei zweite Anschläge (212, 214, 216, 218) trägt, so dass, wenn der Anschlagabschnitt in Bezug auf den Federabschnitt in eine Richtung geschwenkt wird, die erste Blattfeder (240, 242) zuerst mit einem ersten Anschlag (212, 214, 216, 218) in Eingriff kommt und der Schwenkbewegung Widerstand leistet, und nach einem bestimmten weiteren Schwenkwinkel die zweite Blattfeder (240, 242) mit einem zweiten Anschlag (212, 214, 216, 218) in Eingriff kommt und der Schwenkbewegung Widerstand leistet, und entsprechend, wenn der Anschlagabschnitt in Bezug auf den Federabschnitt in die entgegengesetzte Richtung geschwenkt wird, die zweite Blattfeder (240, 242) zuerst in den anderen zweiten Anschlag (212, 214, 216, 218) eingreift und der Schwenkbewegung Widerstand leistet, und nach einem bestimmten weiteren Schwenkwinkel die erste Blattfeder (240, 242) in den anderen ersten Anschlag (212, 214, 216, 218) eingreift und der Schwenkbewegung widersteht, wobei sich die Blattfedern (240, 242) in entgegengesetzte Richtungen erstrecken.

2. Fahrzeug nach Anspruch 1, wobei der bestimmte Schwenkwinkel 8 Grad oder mehr beträgt.

3. Fahrzeug nach Anspruch 1, wobei der bestimmte Schwenkwinkel 10 Grad oder mehr beträgt.

4. Fahrzeug nach Anspruch 1 oder Anspruch 2 oder Anspruch 3, wobei der bestimmte Schwenkwinkel 16 Grad oder weniger beträgt.

5. Fahrzeug nach Anspruch 1, 2 oder 3, wobei der bestimmte Schwenkwinkel 14 Grad oder weniger beträgt.

6. Fahrzeug nach einem der vorhergehenden Ansprüche, wobei die Blattfedern (240, 242) in einem Winkel zueinander stehen.

7. Ein Fahrzeug nach einem der vorhergehenden Ansprüche, wobei der Federabschnitt einen Rahmen (210) um den Anschlagabschnitt (212, 214, 216, 218) herum aufweist.

8. Fahrzeug nach einem der vorhergehenden Ansprüche, wobei das Federsystem Mittel umfasst, um nach einem festgelegten Schwenkwinkel eine weitere Erhöhung der Federrate zu erreichen.

9. Fahrzeug nach Anspruch 8, wobei die Mittel einen Drehpunkt (292) umfassen, der mit jeder Blattfeder (240, 242) in Zusammenhang steht, wobei der Drehpunkt (292) die effektive Länge der Blattfeder (240, 242) verkürzt und somit die Federkraft erhöht, wobei der Drehpunkt (292) nach einem festgelegten Biegewinkel der Blattfeder (240, 242) in die Blattfeder (240, 242) eingreift.

10. Fahrzeug nach Anspruch 9, wobei der festgelegte Biegewinkel 16 Grad oder mehr beträgt.

11. Fahrzeug nach Anspruch 9, wobei der festgelegte Biegewinkel 18 Grad oder mehr beträgt.

12. Ein Fahrzeug nach Anspruch 9, 10 oder 11, wobei der festgelegte Biegewinkel 24 Grad oder weniger beträgt.

13. Fahrzeug nach Anspruch 9, 10 oder 11, wobei der festgelegte Biegewinkel 22 Grad oder weniger beträgt.

14. Fahrzeug nach einem der vorhergehenden Ansprüche, wobei sich die Anschläge (212, 214, 216, 218) am kippbaren Teil (20) und die Blattfedern (240, 242) am zweiten Teil befinden.

15. Fahrzeug nach einem der vorhergehenden Ansprüche, wobei der zweite Teil (22) einen Rahmen (210) um den Abschnitt des kippbaren Teils bildet, der die Anschläge (212, 214, 216, 218) trägt.

## Revendications

1. Véhicule (10) comportant une partie basculante (20) pour le conducteur, la partie basculante (20) ayant au moins une roue (16) au contact du sol, le véhicule (10) ayant en outre une seconde partie (22) portant au moins une roue (16) au contact du sol sur chaque côté du véhicule (10), des moyens de liaison reliant les deux parties de façon que la partie basculante (20) puisse basculer par rapport à la seconde partie (22) pour que le conducteur puisse s'incliner dans un virage et un système de ressort-lame (240) pour résister au basculement de la partie basculante (20) par rapport à la seconde partie (22),
véhicule dans lequel
la résistance au basculement assurée par le système de ressort-lame est telle qu'il réalise un premier coefficient d'augmentation de la résistance au basculement dans une première plage jusqu'à un premier angle de basculement et un second coefficient d'augmentation de la résistance au basculement dans une seconde plage à partir du premier angle jusqu'à un second angle de basculement, plus grand, le second coefficient étant supérieur au premier coefficient,
* le système de ressort-lame ayant une section de ressort et une section de butée, la section de ressort et la section de butée étant organisées pour basculer l'une par rapport à l'autre, la section de ressort portant au moins un premier ressort-lame (240, 242), et
la section de butée portant deux butées (212, 214, 216, 218) et la section de ressort portant un second ressort-lame (240, 242) et la section de butée porte des secondes butées (212, 214, 216, 218) de façon que lorsque la section de butée bascule par rapport à la section de ressort dans une direction, le premier ressort-lame (240, 242) rencontre d'abord une première butée (212, 214, 216, 218) et résiste au mouvement de basculement et après un certain autre angle de basculement, le second ressort-lame (240, 242) rencontre une seconde butée (212, 214, 216, 218) et résiste au mouvement de basculement et, de façon correspondante,
lorsque la section de butée bascule par rapport à la section de ressort dans la direction opposée, le second ressort-lame (240, 242) rencontre d'abord l'autre seconde butée (212, 214, 216, 218) et résiste au mouvement de basculement et, de façon correspondante,
lorsque la section de butée bascule par rapport à la section de ressort dans la direction opposée, le second ressort-lame (240, 242) rencontre d'abord l'autre seconde butée (212, 214, 216, 218) et résiste au mouvement de basculement et après un certain autre angle de basculement, le premier ressort-lame (240, 242) rencontre l'autre première butée (212, 214, 216, 218) et résiste au mouvement de basculement, les ressorts-lames (240, 242) s'étendant dans des directions opposées.

2. Véhicule selon la revendication 1,
dans lequel
le certain angle de basculement est de 8 degrés ou plus.

3. Véhicule selon la revendication 1,
dans lequel
le certain angle de basculement est de 10 degrés ou plus,

4. Véhicule selon la revendication 1, la revendication 2 ou la revendication 3,
dans lequel
le certain angle de basculement est de 16 degrés ou moins.

5. Véhicule selon les revendications 1, 2 ou 3,
dans lequel
le certain angle de basculement est de 14 degrés ou moins.

6. Véhicule selon l'une quelconque des revendications précédentes,
dans lequel
les ressorts-lames (240, 242) font un angle l'un par rapport à l'autre.

7. Véhicule selon l'une quelconque des revendications précédentes,
dans lequel
la section de ressort comprend un châssis (210) autour de la section de butée (212, 214, 216, 218).

8. Véhicule selon l'une quelconque des revendications précédentes,
dans lequel
le système de ressort comprend des moyens pour assurer une augmentation supplémentaire du coefficient de ressort après un angle de basculement fixé.

9. Véhicule selon la revendication 8,
dans lequel
les moyens comprennent un point d'appui (292) associé à chaque ressort-lame (240, 242), le point d'appui (292) fonctionnant pour raccourcir la longueur efficace du ressort-lame (240, 242) et ainsi augmenter la force du ressort, le point d'appui (292) coopérant avec le premier ressort-lame (240, 242) après l'angle de courbure fixé du ressort-lame (240, 242).

10. Véhicule selon la revendication 8,
dans lequel
l'angle de courbure fixé est de 16 degrés ou plus.

11. Véhicule selon la revendication 9,
dans lequel
l'angle de courbure fixé est de 18 degrés ou plus.

12. Véhicule selon l'une des revendications 9, 10 ou 11,
dans lequel
l'angle de courbure fixé est de 24 degrés ou moins.

13. Véhicule selon les revendications 9, 10 ou 11,
dans lequel
l'angle de courbure fixé est de 22 degrés ou moins.

14. Véhicule selon l'une quelconque des revendications précédentes,
dans lequel
les butées (212, 214, 216, 218) sont sur la partie basculante (20) et les ressorts-lames (240, 242) sont sur la seconde partie.

15. Véhicule selon l'une quelconque des revendications précédentes,
dans lequel
la seconde partie (22) forme un châssis (210) autour de la portion de la partie basculante qui porte les butées (212, 214, 216, 218).
